Europäisches Patentamt

European Patent Office

Office européen des brevets

(11) Publication number: **0 170 625**
A2

## (12) EUROPEAN PATENT APPLICATION

(21) Application number: **85830026.2**

(22) Date of filing: **05.02.85**

(51) Int. Cl.⁴: **B 62 K 13/00**

(30) Priority: **18.07.84 IT 4858784**

(43) Date of publication of application:
**05.02.86 Bulletin 86/6**

(84) Designated Contracting States:
**AT BE CH DE FR GB LI NL SE**

(71) Applicant: **Di Paolo, Giancarlo**
**Via Canzone del Piave, 51**
**I-00144 Roma(IT)**

(72) Inventor: **Di Paolo, Giancarlo**
**Via Canzone del Piave, 51**
**I-00144 Roma(IT)**

(74) Representative: **de Simone, Domenico et al,**
**Ing. Barzanò & Zanardo S.p.A. Via Piemonte 26**
**I-00187 Roma(IT)**

(54) A device for transforming cycles or similar into multiple capacity vehicles for more occupants.

(57) A device for transforming cycles or similar from vehicles for only one occupant into multiple vehicles for two or more occupants, who pedal in synchrony, consisting in a frame A - B of telescopic variable dimension, to which a pedal - pedal crank P - 18 group is applied, said group being added to the main group and connected to the same by means of bars or connecting rods 25 and a sliding structure 9, with functions of saddle support adjustable from 0°to 180°so as to place saddle S at the desired inclination to the horizontal plane.

EP 0 170 625 A2

Croydon Printing Company Ltd.

./...

FIG.8

## SPECIFICATION

The present invention concerns a device for transforming cycles or similar into multiple capacity vehicles for more occupants, comprising a tubolar net-like structure with variable dimensions and a multiple pedal and pedal crank mechanism for the advancing.

It is already well known that cycles have always been realized in two different versions according to two different vehicles: bicycles for only one occupant and tandems, which are double or multiple so as to carry, besides the driver, another or more occupants who contribute to the advancing by means of pedal and pedal crank mechanisms being in turn coupled, by means of block chains, to the principal one.

Recently, bicycles have been realized which keeping the dimensions of a single vehicle, allow the placing of a second occupant onto a saddle located above the back wheel, whereby the second occupant may contribute to the movement by means of a pedal and pedal crank mechanism directly operating onto the back wheel hub.

Cycles showing the possibility of a double function of single and tandem bicycle, characterized in a frame extension for easily and efficaciously receiving two or more occupants, have never been realized until now.

Infact, the embodiment with the placing of the second occupant onto the back wheel, is provided with a frame of limited dimension, which implies that the two occupants must make use of a limited linear space, with consequent evident uneasiness and difficulty in handling.

The aim of the present invention is to obtain a kind of cycle never realized until now, which can be used, according to needs and desires, like a single or multiple (tandem) vehicle.

This aim is reached by the present invention according to the attached claims, said invention comprising a variable dimension frame, consisting in a net-like, fix tubolar structure and in a one being mobile due to the presence of a plurality of telescopes allowing to make said structure longer or shorter; in a pedal and pedal crank mechanism to be applied to said frame, in an elongated position, and coupled, by means of bars or connecting rods, to the main pedal and pedal crank group, so as to contribute in a perfect cooperation to the advancing; in a saddle support tube which may be applied onto said fix frame structure, and characterized in the possibility of rotating, together with the connected saddle, from 0° to 180°, in both directions; and in a luggage container, which may contain all above mentioned elements, should the same not be used in the single cycle.

The present invention will be explained in detail according to the attached drawings in which a preferred embodiment is shown.

Figures 1 - 1' show a lateral view in partial transparency of the variable dimension frame with three telescopes in shortened position in the single cycle variant, as well as a plant view of the two lower telescopes.

Figures 2 - 2' respectively show a lateral view in partial transparency of the completely elongated frame, and a plant view of the two lower telescopes.

Figure 3 shows an exploded view of the components of the front rotation group, provided with elements for the connection to the main back group.

Figure 4 shows a lateral view of the whole connection between the two rotation groups in the elongated frame disposition, and an exploded view of the pedals.

Figures 5 and 6 respectively show a lateral scheme of the axonometric exploded view of the saddle support structure.

Figure 7 shows the saddle's connection.

Figure 8 shows a lateral view in partial transparency of the central part of a cycle of the kind of a complete bicycle in the tandem version.

Figures 9 - 10 show an exploded and a lateral view of the front and back handle bars.

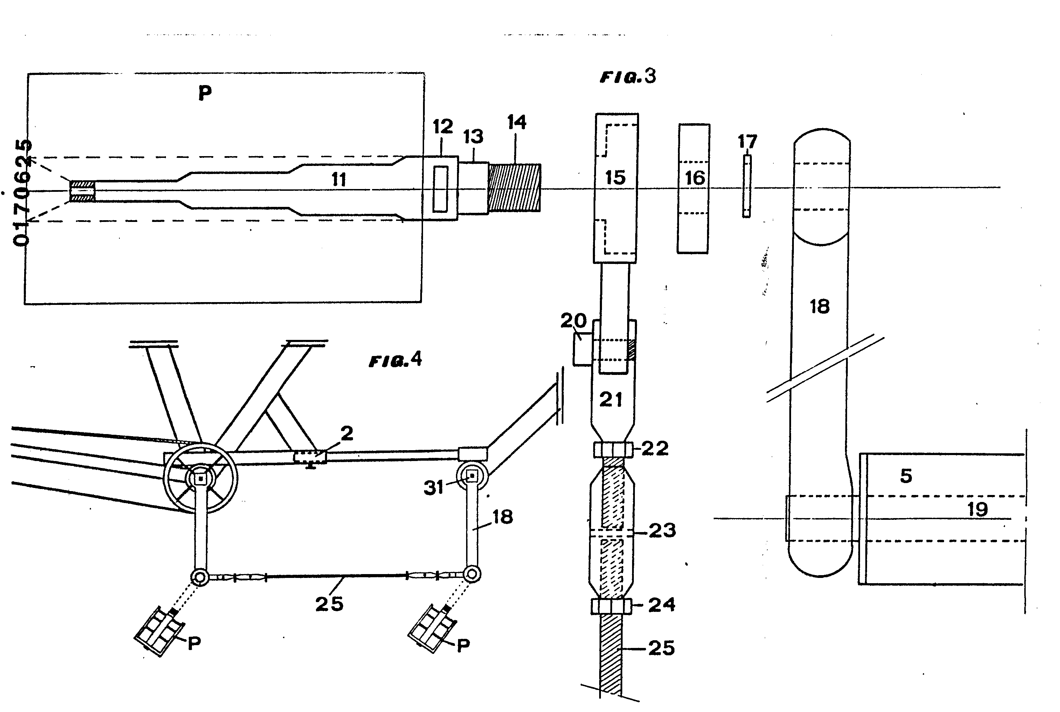

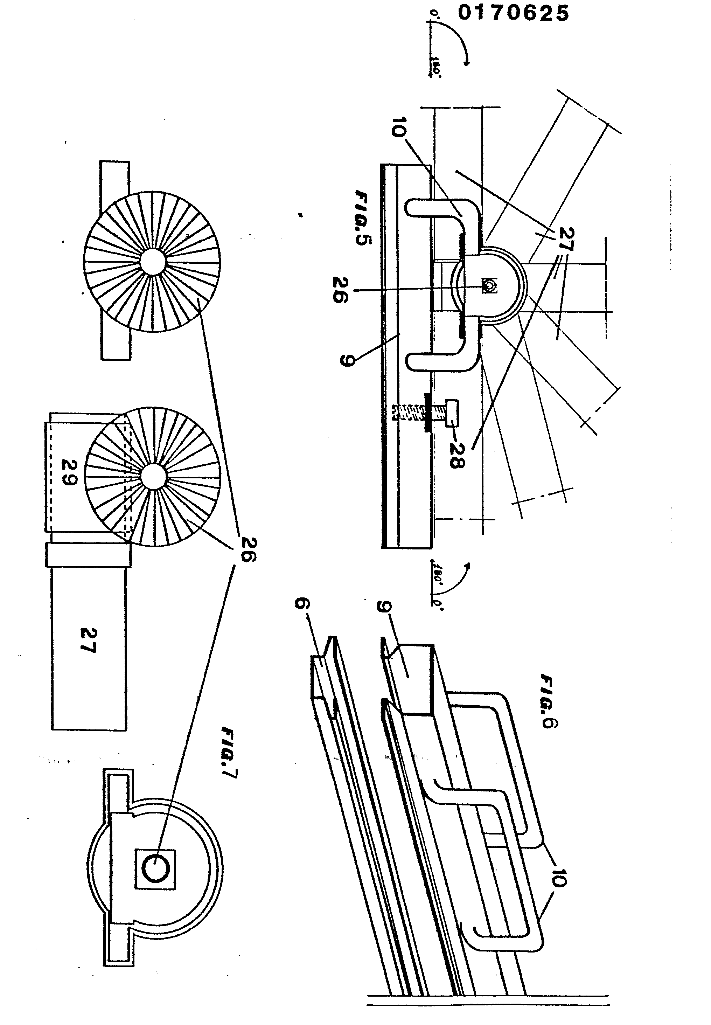

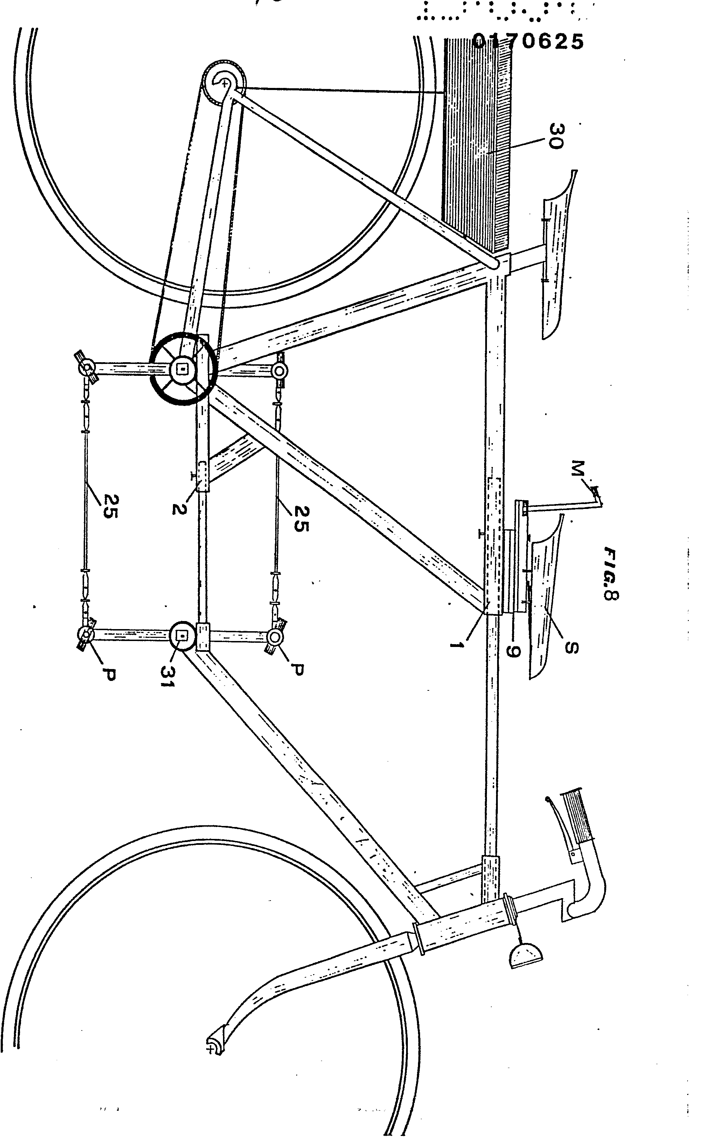

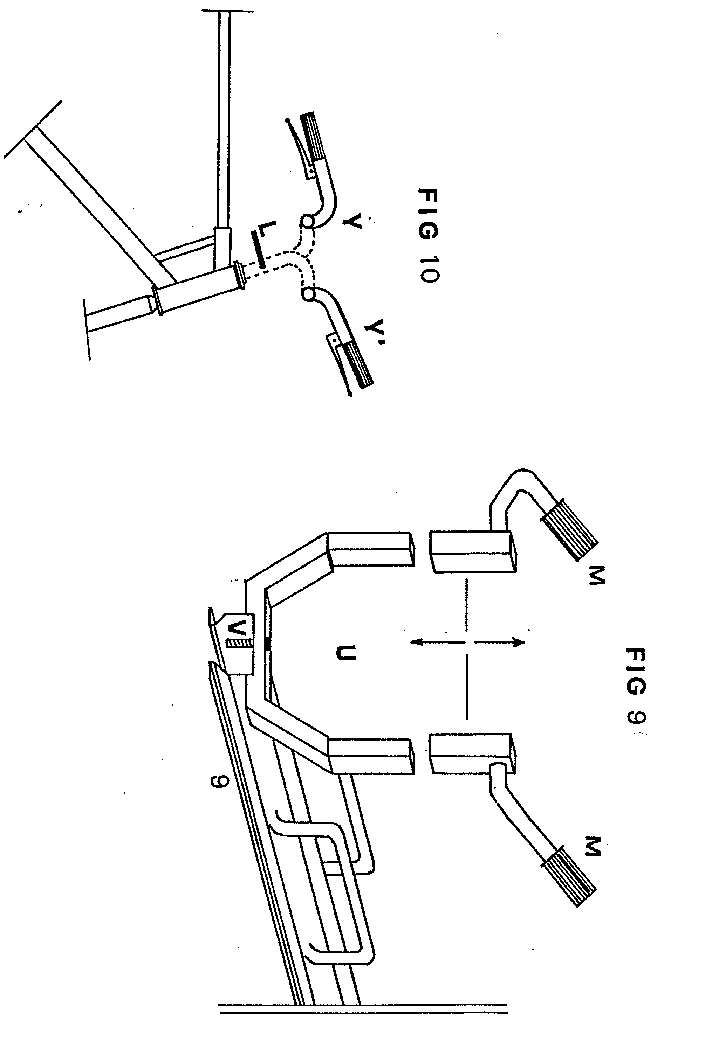

The figures show a device for transforming cycles or similar into vehicles for two occupants, comprising a net-like tubolar fix structure A and a net-like tubolar structure B moving like a telescope towards structure A by means of upper telescope 1 and the two lower telescopes 2 and 3, which may be placed above or below central movement boxes 4 and 5, and further provided with a T-shaped open line 6 connected to horizontal tube T for housing T-shaped structure 9, whose sliding may be adjusted, and having the function of front saddle support group, the front part being removable and adjustable in the two sliding directions and in height as shown in figures 5 and 6, and locking systems 7 and 8 of respective telescopes 1 and 2 - 3, for opening and closing.

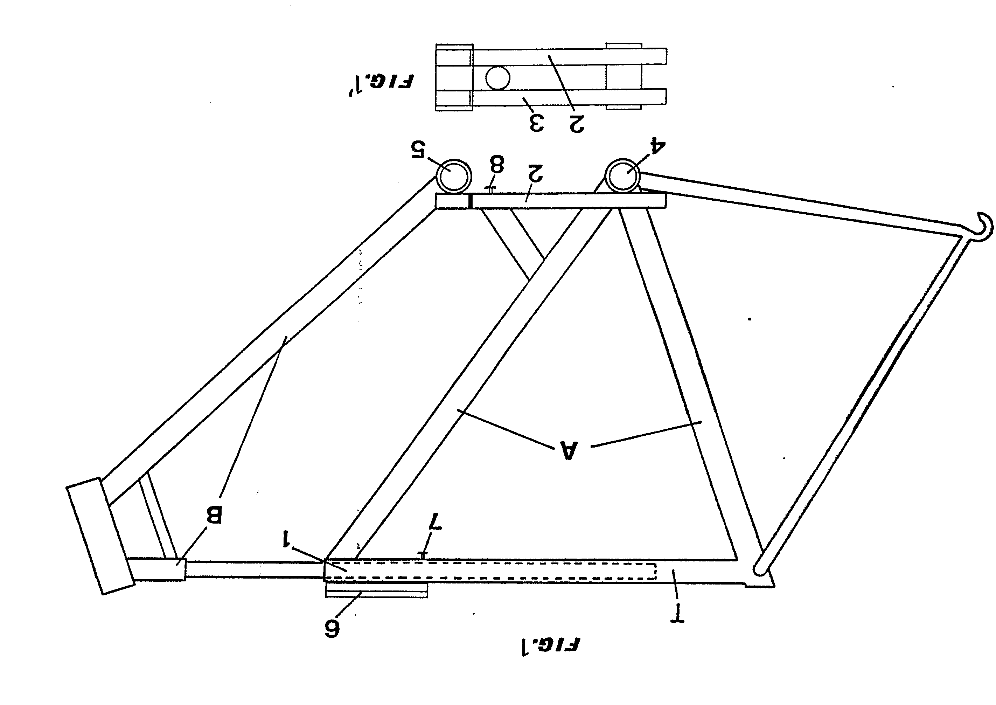

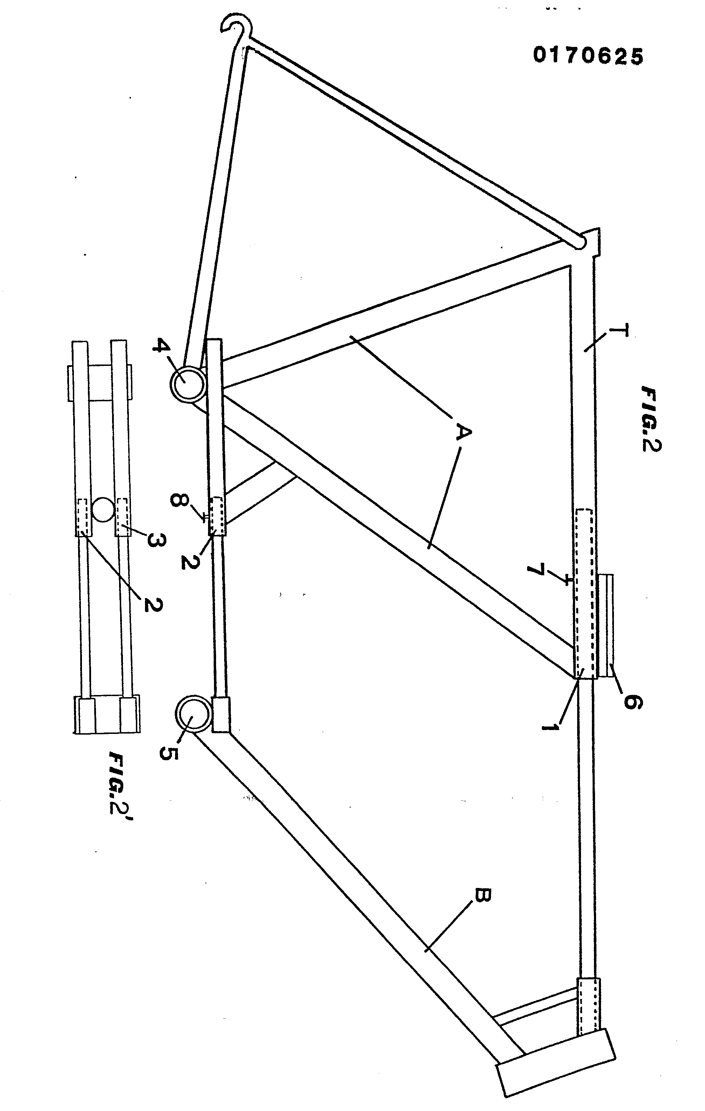

According to the present invention, the front rotation group provided with elements for the connection to the back group shown in figures 3 and 4, comprises:

- pedal P,
- conical axis 11 of pedal P,
- key-connection 12 to mount and remove pedal P,
- housing 13 of ball-bearing 16 with the bearing support thereof,

- threaded part 14 for connecting pedal P to pedal crank 18,

- housing 15 of ball-bearing 16,

- ball bearing 16,

- separating washer 17,

- pedal crank 18,

- central movement box 5,

- central movement axis 19, ending up with a square section,

- blocking screw pin 20, at quick insertion and extraction,

- element 21 for quick connection between front and back pedals by means of the bearing support,

- locking nut 22,

- adjustable connection 23 between front and back pedal,

- locking nut 24,

- connection bar 25 between front and back rotation group.

Relating to the details of figures 5, 6 and 7, uprights 10 are liably placed in sliding structure 9, adjustable in both directions, whereby said uprights 10 receive clamp 26 allowing the connection to saddle S, to back handle bar M, through saddle supporting tube 27 shown in figure 5, rotatable from 0° to 180° in both senses, so as to allow the highering and lowering of tube 27 and therefore the placing of saddle S in parallel or, in any case, at the desired inclination with respect to the horizontal plane.

Screw 28 allows the quick locking and release between structure 9 and line 6, while 29 shows the housing ring of saddle supporting tube 27.

Front saddle S, together with back handle bar M, are easily removable and may be placed into luggage container 30.

The disassembly of the connection between the front and the back rotation group takes place by removing fixing pins 31 connecting front pedal cranks 18 to front central movement box axis 19, and also removing connection bolt 20 between housing 15 and connection 21, so as to detach the front pedal - pedal crank group together with the connection mechanism to the back rotation group, which may be placed in luggage container 30.

A further feature of the present invention consists in back handle bar M and front handle bar Y, shown in figures 9 and 10, characterized in being, respectively, removable and rotating so as to be placed with the handle frontwardly, in the driving direction, in the tandem use.

For what concerns figure 9, the two half handle bars M, usually housed for transport as already mentioned in back luggage container 30, are placed at the top of structure U out of one piece with sliding structure 9, the handles being frontwardly directed so as to contain the first driver. Pins V and 28 are used to block between each other elements 9 and 6.

Front handle bar Y is shown in figure 10 in the shape of single, closed bicycle while, following to the operating of lever L, which controls the locking and releasing of an expander of well known kind onto the handle bar supporting tube, a 180° rotation of the whole group os caused, thus bringing the handle bar into shape Y' of open tandem-like bicycle.

It is evident that said feature allows to bring the driver-handle bar distance to an optimal value in both cases of single and multiple bicycle.

Another embodiment of the present invention also provides the possibility of being applied to frames of motor-bicycles and similar which thus may obtain a capacity increase.

CLAIMS

1. A device for cycles and similar comprising a net-like tubolar variable dimension structure and a multiple pedal and pedal crank mechanism for the advancing, characterized in that the frame consists in a fix net-like structure (A) and in a structure (B) being mobile due to telescopes (1, 2 and 3) allowing the elongation and the shortening thereof, and in front rotation group with pedals (P) and pedal cranks (18), which may be applied onto said frame, in elongated position, and coupled by means of bars or connecting rods (25) to the main pedal - pedal crank group so as to cooperate to the advancing, and in the presence of a saddle supporting tube (27), rotatable from 0° to 180°, and in the presence of a luggage container for receiving all elements not used in the single-cycle embodiment.

2. A device according to claim 1 characterized in the presence of a T-shaped open line (6), connected to a horizontal tube (T) for housing a T-shaped structure (9) adjustably sliding, having the function of front saddle supporting group being removable and adjustable in both sliding directions and in height.

3. A device according to claim 1 characterized in that the front rotation group provided with elements for the connection to the back group comprises: a pedal (P), a conical axis (11), a key-connection (12) to mount and remove pedal (P), a housing (13) of a ball-bearing (16) with the bearing support thereof, a threaded part (14) for connecting pedal (P) to pedal crank (18), a housing (15) of ball-bearing (16), ball bearing (16), a separating washer (17), pedal crank (18), a central movement box (5), a central movement axis (19) ending up with a square section, a blocking screw pin (20) at quick insertion and extraction, an element (21) for quick connection between front and back pedals by means of the bearing support, a locking nut (22), an adjustable connection (23) between front and back pedal, a locking nut (24) and a connection bar (25) between front and back rotation group.

4.A device according to claim 1 and 2 characterized in that a structure (9) liably carries uprights (10) for the housing of a clamp (26) allowing the connection of a saddle (S) so as to place the same at the desired inclination to the horizontal plane.

5. A device according to claim 1 characterized in two half back handle bars (M) that may be inserted into a structure (U) out of one piece with a sliding structure (9) with the handles frontwardly directed so as to contain the first driver, whereby pins (V and 28) are used to block between each other elements (9 and 6).

0170625

6. A device according to claim 1 characterized in that a front handle bar (Y) may be rotated of 180° in an (Y') tandem cycle version, so as to place the handles in the driving sense for obtaining an optimal driver-handle bar distance value.

**FIG.1**

**FIG.1'**

0170625

FIG.2

FIG.2'

0170625

FIG.3

FIG.4

P

11

12
13

14

15

16

17

18

19

5

20

21

22

23

24

25

P

P

25

2

31

18

FIG.5

FIG.6

FIG.7

9 10 26 27 28 6 29

0170625

FIG.8

FIG 10

FIG 9